# EUROPEAN PATENT APPLICATION

(11) **EP 4 502 348 A1**
(43) Date of publication of application: **05.02.2025**
(21) Application number: 23774676.3
(22) Date of filing: 14.03.2023
(51) Int. Cl.: F01M 13/02, C01B 3/56, F01M 13/00, F01M 13/04, F01N 3/08

(54) **TREATMENT DEVICE**

(30) Priority: 25.03.2022 JP 2022049956
(71) Applicant: HINO MOTORS, LTD., Hino-shi, Tokyo 191-8660 (JP)
(72) Inventor: TANI, Hiroki, Hino-shi, Tokyo 191-8660 (JP); KATO, Hideki, Hino-shi, Tokyo 191-8660 (JP)
(74) Representative: D Young & Co LLP
(86) International application number: PCT/JP2023/009845
(87) International publication number: WO 2023/182079

(57) **Abstract**

A treatment device for treating a blowby gas of a hydrogen engine, the treatment device including: a catalyst unit provided in an exhaust flow path for circulating an exhaust gas from the hydrogen engine, the catalyst unit for reducing a nitrogen oxide contained in the exhaust gas by using hydrogen as a reducing agent; a scavenging flow path for circulating the blowby gas of the hydrogen engine; a scavenging pump provided in the scavenging flow path, the scavenging pump for scavenging the blowby gas from the hydrogen engine to circulate the blowby gas into the scavenging flow path; a hydrogen separation filter provided downstream of the scavenging pump in the scavenging flow path, the hydrogen separation filter for separating hydrogen contained in the blowby gas to generate, from the blowby gas, a hydrogen gas and a treated gas as a blowby gas obtained after removal of the hydrogen; and a hydrogen gas addition unit for adding the hydrogen gas generated in the hydrogen separation filter to the catalyst unit.

## Description

### Technical Field

The present disclosure relates to a treatment device.

### Background Art

Patent Literature 1 describes an engine that can be operated with a fuel containing a hydrogen gas. In this engine, a ventilation opening is formed in a crankcase, and a ventilation flow path is provided in the ventilation opening. A ventilation fan is provided in the ventilation flow path, so that a gas inside the crankcase is forcibly discharged to the outside.

### Citation List

### Patent Literature

Patent Literature 1: Japanese Unexamined Patent Publication No. 2021-127704

### Summary of Invention

### Technical Problem

In the engine described in Patent Literature 1, in a case where there is a concern that the hydrogen gas ignites inside the crankcase, the inside of the crankcase is ventilated by driving a ventilation fan to suppress ignition of the hydrogen gas inside the crankcase.

However, in the case of simply refluxing the blowby gas containing hydrogen to the intake air of the engine, the ignition risk in the intake air increases. Furthermore, when the blowby gas containing hydrogen is opened to the atmosphere, the blowby gas stays in a part of a structure (for example, a vehicle) on which the engine is mounted, and similarly, there is a concern that the ignition risk increases. In Patent Literature 1, a treatment of the blowby gas for reducing such an ignition risk is not considered.

Therefore, an object of the present disclosure is to provide a treatment device capable of reducing the ignition risk of a blowby gas of a hydrogen engine.

### Solution to Problem

A treatment device according to the present disclosure is a treatment device for treating a blowby gas of a hydrogen engine, the treatment device including: a catalyst unit provided in an exhaust flow path for circulating an exhaust gas from the hydrogen engine, and configured to reduce a nitrogen oxide contained in the exhaust gas by using hydrogen as a reducing agent; a scavenging flow path configured to circulate the blowby gas of the hydrogen engine; a scavenging pump provided in the scavenging flow path, and configured to scavenge the blowby gas from the hydrogen engine to circulate the blowby gas into the scavenging flow path; a hydrogen separation filter provided downstream of the scavenging pump in the scavenging flow path, and configured to generate a hydrogen gas and a treated gas as a blowby gas obtained after removal of the hydrogen by separating hydrogen contained in the blowby gas from the blowby gas; and a hydrogen gas addition unit configured to add the hydrogen gas generated in the hydrogen separation filter to the catalyst unit.

In this treatment device, a pump is provided in the scavenging flow path circulating the blowby gas from the hydrogen engine. Therefore, by driving this pump, it is possible to actively scavenge the blowby gas containing hydrogen from the hydrogen engine. In particular, in this treatment device, the hydrogen separation filter separating hydrogen from the blowby gas to generate a hydrogen gas and a treated gas is provided downstream of the pump in the scavenging flow path. The hydrogen gas among the gases generated from the blowby gas is added to the catalyst unit and consumed by being subjected to reduction of a nitrogen oxide. Therefore, among the gases generated from the blowby gas, a gas refluxed to the intake air of the hydrogen engine or opened to the atmosphere becomes a treated gas having a relatively low hydrogen concentration. Therefore, the ignition risk is reduced. Furthermore, since the hydrogen gas generated from the blowby gas is added to the catalyst unit and reused, the amount of hydrogen separately added to the catalyst unit can be reduced.

In the treatment device according to the present disclosure, the scavenging flow path may include a refluxing unit configured to reflux the treated gas generated in the hydrogen separation filter to an intake flow path of the hydrogen engine. In this case, the treated gas of the blowby gas can be returned to the intake side of the hydrogen engine.

The treatment device according to present disclosure may further include: a first measurement unit configured to measure a hydrogen concentration of the blowby gas in the hydrogen engine; a second measurement unit configured to measure a hydrogen concentration of the treated gas; and a control unit configured to control each unit on the basis of measurement results of the first measurement unit and the second measurement unit, in which the control unit may execute a first process of increasing a scavenging amount of the blowby gas by the scavenging pump in a case where the hydrogen concentration of the blowby gas in the hydrogen engine is equal to or more than a first threshold lower than a lower flammability limit concentration of hydrogen on the basis of the measurement result of the first measurement unit, and a second process of increasing a separation amount of hydrogen from the blowby gas by the hydrogen separation filter in a case where the hydrogen concentration of the treated gas is equal to or more than a second threshold lower than the lower flammability limit concentration of hydrogen on the basis of the measurement result of the second measurement unit. In this case, the ignition risk of the blowby gas can be more reliably reduced. Note that, the first threshold and the second threshold may be the same value as each other, or may be different values from each other, for example, the second threshold is lower (or higher) than the first threshold. Furthermore, the hydrogen concentration of the blowby gas in the hydrogen engine means a hydrogen concentration in a place (for example, in a crankcase) in which the blowby gas can be mixed in the hydrogen engine.

### Advantageous Effects of Invention

According to the present disclosure, it is possible to provide a treatment device capable of reducing the ignition risk of a blowby gas of a hydrogen engine.

### Brief Description of Drawings

FIG. 1 is a schematic diagram illustrating a treatment device according to an embodiment.
FIG. 2 is a flowchart illustrating an operation of the treatment device illustrated in FIG. 1.

### Description of Embodiments

Hereinafter, an embodiment will be described with reference to the drawings. Note that, in the drawings, the same elements or corresponding elements are denoted by the same reference numerals, and redundant description is omitted.

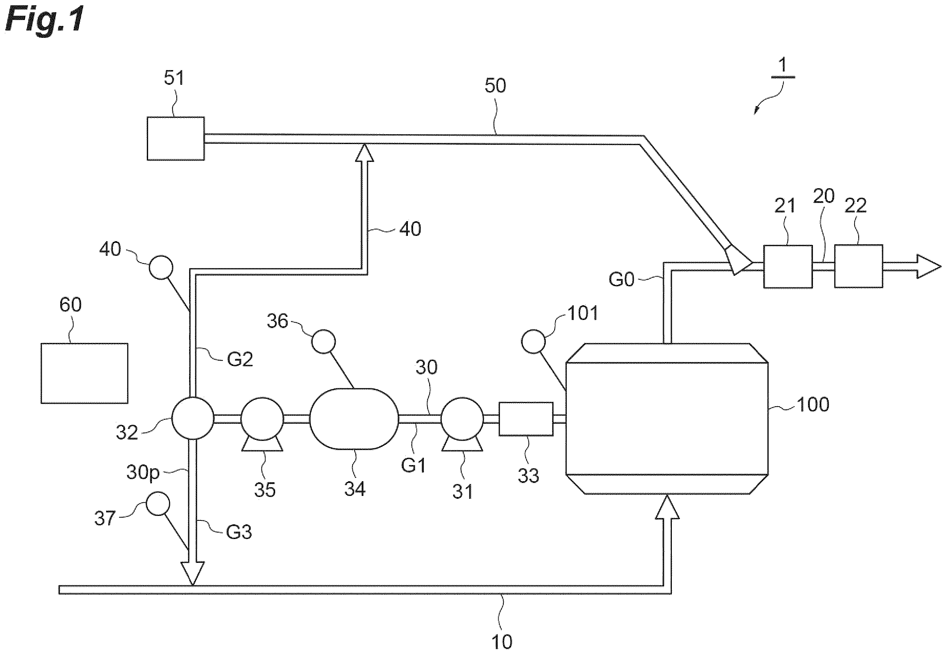

FIG. 1 is a schematic diagram illustrating a treatment device according to an embodiment. A treatment device 1 illustrated in FIG. 1 is mounted on, for example, a large-sized vehicle such as a bus or a truck or an industrial vehicle, and is also used for treating an exhaust gas G0 and a blowby gas G1 generated in an engine 100. The engine 100 is an internal combustion engine (hydrogen engine) driven by a fuel containing hydrogen. A vehicle on which the treatment device 1 is mounted may be, for example, a so-called series hybrid vehicle that uses the engine 100 as a power source for power generation. In this case, the engine 100 may be configured to be driven when the remaining capacity of the battery decreases.

The engine 100 is, for example, a reciprocating engine, and includes a crankcase housing a crankshaft or the like, a cylinder housing a piston driving the crankshaft, or the like, a cylinder head, and the like. A combustion chamber in which a fuel containing hydrogen is combusted is formed in the cylinder, and the blowby gas G1 containing hydrogen leaked from the combustion chamber is retained in the crankcase, the cylinder head, and the like. An intake flow path 10 for circulating air into the combustion chamber and an exhaust flow path 20 for circulating the exhaust gas G0 from the combustion chamber are connected to the engine 100.

The treatment device 1 includes a catalyst unit 21 and a post-treatment unit 22 provided in the exhaust flow path 20. The catalyst unit 21 is an H2-SCR (Selective Catalytic Reduction) device for selectively reducing a nitrogen oxide contained in the exhaust gas G0 by using hydrogen as a reducing agent. The post-treatment unit 22 is provided downstream of the catalyst unit 21, and may include, for example, any element such as another catalyst unit (for example, a urea SCR device) selectively reducing a nitrogen oxide contained in the exhaust gas G0 by using ammonia or the like as a reducing agent, a filter for collecting a particulate matter (PM) contained in the exhaust gas G0, or a device oxidizing and purifying hydrocarbons (HC), carbon monoxide (CO), and the like contained in the exhaust gas G0.

The treatment device 1 includes a scavenging flow path 30 for circulating the blowby gas G1 of the engine 100. Furthermore, the treatment device 1 also includes a scavenging pump 31, a hydrogen separation filter 32, a filter 33, a tank 34, a booster pump 35, and a hydrogen concentration meter 36 which are provided in the scavenging flow path 30. The scavenging flow path 30 is connected to an arbitrary portion (for example, a crankcase, a cylinder head, or the like) of the engine 100 where the blowby gas G1 is to be scavenged. The scavenging pump 31 is used for scavenging the blowby gas G1 from the engine 100 to circulate the blowby gas G1 into the scavenging flow path 30.

The hydrogen separation filter 32 is provided downstream of the scavenging pump 31 in the scavenging flow path 30. The hydrogen separation filter 32 separates hydrogen contained in the blowby gas G1 to generate a hydrogen gas G2 and a treated gas G3 as a blowby gas obtained after removal of the hydrogen from the blowby gas G1. More specifically, the hydrogen separation filter 32 separates the blowby gas G1 into a high-purity hydrogen gas (hydrogen gas G2) and a gas (treated gas G3) other than the hydrogen gas by, for example, using palladium. For example, in the hydrogen separation filter 32, a method of extracting high-purity hydrogen by a hydrogen permeation mechanism using a palladium membrane is assumed.

The filter 33 is provided upstream of the scavenging pump 31 in the scavenging flow path 30. The filter 33 removes oil and condensed water contained in the blowby gas G1. The tank 34 is provided between the scavenging pump 31 and the hydrogen separation filter 32 in the scavenging flow path 30. The tank 34 can store the blowby gas G1 led out from the engine 100 to the scavenging flow path 30 by driving of the scavenging pump 31.

The booster pump 35 is provided between the tank 34 and the hydrogen separation filter 32 in the scavenging flow path 30. The booster pump 35 applies pressure to the blowby gas G1 so that the pressure thereof is equal to or higher than pressure (intake pressure) for returning the blowby gas G1 (treated gas G3) to the intake flow path 10 as described later and injection pressure of a hydrogen gas to the catalyst unit 21 as described later. The hydrogen concentration meter 36 is provided in the tank 34, and measures the hydrogen concentration of the blowby gas G1 in the tank 34 (that is, in the preceding stage of the hydrogen separation filter 32).

The scavenging flow path 30 is connected to the intake flow path 10 on the downstream side of the hydrogen separation filter 32. Therefore, in the treatment device 1, the treated gas G3 generated from the blowby gas G1 in the hydrogen separation filter 32 can be refluxed to the intake flow path 10. In other words, the scavenging flow path 30 includes a refluxing unit 30p for refluxing the treated gas G3 to the intake flow path 10 as a portion downstream of the hydrogen separation filter 32. Further, the treatment device 1 includes a hydrogen concentration meter (second measurement unit) 37 provided in the refluxing unit 30p. The hydrogen concentration meter 37 measures the hydrogen concentration of the treated gas G3.

Meanwhile, the treatment device 1 includes a hydrogen gas flow path 40 connected to the scavenging flow path 30 via the hydrogen separation filter 32 and a hydrogen supply path 50 for supplying (adding) hydrogen to the catalyst unit 21. The hydrogen gas flow path 40 is connected to the hydrogen separation filter 32 at one end and connected to the hydrogen supply path 50 at the other end. Thereby, in the treatment device 1, the hydrogen gas G2 generated from the blowby gas G1 in the hydrogen separation filter 32 can be introduced into the hydrogen supply path 50 through the hydrogen gas flow path 40.

The hydrogen supply path 50 is connected to a hydrogen supply unit 51 at one end and connected to the preceding stage of the catalyst unit 21 of the exhaust flow path 20 at the other end. Thereby, in the treatment device 1, hydrogen supplied from the hydrogen supply unit 51 and the hydrogen gas G2 introduced from the hydrogen separation filter 32 through the hydrogen gas flow path 40 can be supplied (added) to the catalyst unit 21 through the hydrogen supply path 50. That is, the hydrogen gas flow path 40 and the hydrogen supply path 50 constitute a hydrogen gas addition unit 45 for supplying the hydrogen gas G2 generated in the hydrogen separation filter 32 to the catalyst unit 21 so as to add hydrogen to the catalyst unit 21.

The treatment device 1 includes a hydrogen concentration meter 41 provided in the hydrogen gas flow path 40. The hydrogen concentration meter 41 measures the hydrogen concentration of the hydrogen gas G2. Furthermore, the treatment device 1 includes a hydrogen concentration meter (first measurement unit) 101 provided in the engine 100. The hydrogen concentration meter 101 measures the hydrogen concentration of the blowby gas G1 in the engine 100. The hydrogen concentration meter 101 measures the hydrogen concentration of the blowby gas G1 inside the engine 100 such as a crankcase and a cylinder head.

The hydrogen concentration meter 101 is provided on at least one of the crankcase and the cylinder head, and can measure the hydrogen concentration of the blowby gas G1 in the one of the crankcase and the cylinder head. Furthermore, the hydrogen concentration meter 101 may be provided in another portion of the engine 100 so as to measure the hydrogen concentration of the blowby gas G1 in the another portion.

The hydrogen concentration meters 36, 37, 41, and 101 described above can be partially omitted by being configured to estimate (calculate) the measurement result of another part by calculation based on the measurement result of a part thereof. For example, by calculating and estimating the hydrogen concentration of the hydrogen gas G2 on the basis of the measurement result of the hydrogen concentration of the blowby gas G1 in the engine 100 by the hydrogen concentration meter 101 and the measurement result of the hydrogen concentration of the treated gas G3 by the hydrogen concentration meter 37, the hydrogen concentration meter 41 for measuring the hydrogen concentration of the hydrogen gas G2 can be omitted.

Here, the treatment device 1 includes a control unit 60. The control unit 60 acquires information indicating the measurement result of the hydrogen concentration from each of the hydrogen concentration meters 36, 37, 41, and 101 and controls each unit of the treatment device 1 on the basis of the information. The control unit 60 can be physically configured as a computer system including a CPU (Central Processing Unit), a RAM (Random Access Memory) and a ROM (Read Only Memory) as main storage devices, a communication module as a data transmission/reception device, and the like. Each process of the control unit 60 can be realized by operating the communication module and reading and writing data in the RAM or the like under the control of the CPU by reading a predetermined program on the above hardware.

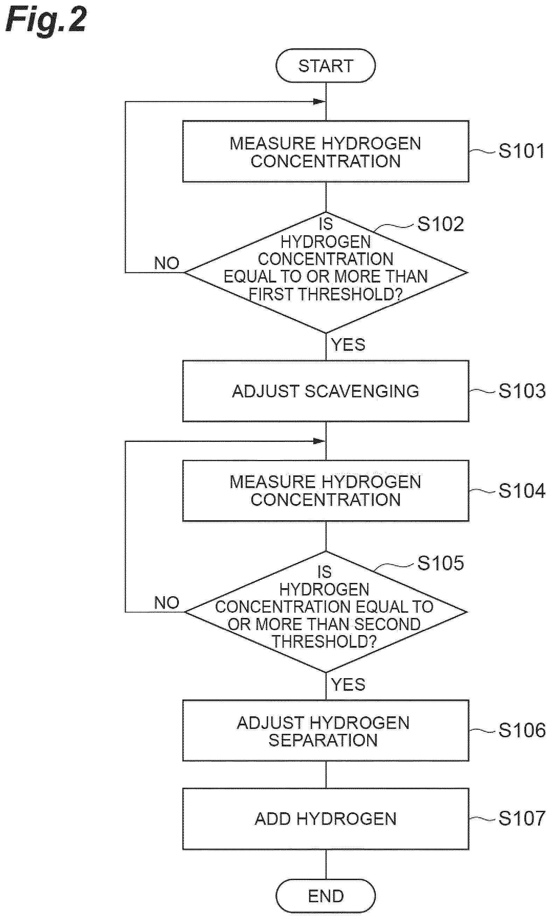

Subsequently, the operation of the treatment device 1 (processes of the control unit 60). FIG. 2 is a flowchart illustrating an operation of the treatment device illustrated in FIG. 1. As illustrated in FIG. 2, in the treatment device 1, first, the hydrogen concentration of the blowby gas G1 in the engine 100 is measured (step S101). The hydrogen concentration of the blowby gas G1 in the engine 100 means a hydrogen concentration in a place where the blowby gas G1 can be mixed in the engine 100, and is, for example, a hydrogen concentration in the crankcase of the engine 100. According to this example, in step S101, the hydrogen concentration meter 101 measures the hydrogen concentration in the crankcase of the engine 100 and provides information indicating the measurement result to the control unit 60.

Subsequently, the control unit 60 determines whether the hydrogen concentration of the blowby gas G1 in the engine 100 measured in step S101 is equal to or more than a first threshold (step S102). The first threshold is a value lower than a lower flammability limit concentration (for example, 4%) of hydrogen in the air, and can be set to, for example, about 2%.

In a case where the result of determination in step S102 is a result indicating that the hydrogen concentration of the blowby gas G1 in the engine 100 is less than the first threshold (step S102: No), the operation of the treatment device 1 returns to step S101, and the subsequent steps are executed again.

On the other hand, in a case where the result of determination in step S102 is a result indicating that the hydrogen concentration of the blowby gas G1 in the engine 100 is equal to or more than the first threshold (step S102: Yes), the control unit 60 performed adjustment so as to increase the scavenging amount of the blowby gas G1 by the scavenging pump 31 and activates the scavenging of a hydrogen concentration measurement place of the engine 100 (step S103).

That is, in step S103, in a case where the hydrogen concentration of the blowby gas G1 in the engine 100 is equal to or more than the first threshold lower than the lower flammability limit concentration of hydrogen on the basis of the measurement result of the hydrogen concentration meter 101, the control unit 60 executes a first process of increasing the scavenging amount of the blowby gas G1 by the scavenging pump 31. The blowby gas G1 scavenged by the scavenging pump 31 is refluxed (as the treated gas G3) to the intake flow path 10 via the scavenging flow path 30 and the hydrogen separation filter 32. At this time, the blowby gas G1 can be stored at least temporarily and partially in the tank 34.

Subsequently, in the treatment device 1, the hydrogen concentration of the treated gas G3 refluxed to the intake flow path 10 is measured (step S104). This is to ensure that the hydrogen concentration in the intake flow path 10 is out of the combustible range of hydrogen. In this step S104, for example, the hydrogen concentration meter 37 measures the hydrogen concentration of the treated gas G3 in the refluxing unit 30p of the scavenging flow path 30 and provides information indicating the measurement result to the control unit 60.

Subsequently, the control unit 60 determines whether the hydrogen concentration of the treated gas G3 measured in step S104 is equal to or more than a second threshold (step S105). The second threshold is a value lower than a lower flammability limit concentration (for example, 4%) of hydrogen in the air, and can be set to, for example, about 2%. Note that, the first threshold and the second threshold may be the same value as each other, or may be different values from each other, for example, the second threshold is lower (or higher) than the first threshold.

In a case where the result of determination in step S105 is a result indicating that the hydrogen concentration of the treated gas G3 is less than the second threshold (step S105: No), the operation of the treatment device 1 returns to step S104, and the subsequent steps are executed again.

On the other hand, in a case where the result of determination in step S105 is a result indicating that the hydrogen concentration of the treated gas G3 is equal to or more than the second threshold (step S105: Yes), the control unit 60 performs adjustment so as to increase the hydrogen separation amount in the hydrogen separation filter 32 (step S106). That is, in step S106, in a case where the hydrogen concentration of the treated gas G3 is equal to or more than the second threshold lower than the lower flammability limit concentration of hydrogen on the basis of the measurement result of the hydrogen concentration meter 37, the control unit 60 executes a second process of increasing the separation amount of hydrogen from the blowby gas G1 by the hydrogen separation filter 32.

Examples of a method for adjusting the hydrogen separation amount in the hydrogen separation filter 32 include the following method. That is, for example, in a case where the hydrogen separation filter 32 uses a palladium membrane as described above, a hydrogen permeation amount J (NL/min·cm²) in the hydrogen separation filter 32 is expressed as α(Pᵢₙ^{1/2} - Pₒᵤₜ^{1/2}) (α is a hydrogen permeation rate, Pᵢₙ is a hydrogen partial pressure on a raw material gas side, and Pₒᵤₜ is a hydrogen partial pressure on a permeate gas side). Therefore, the control unit 60 can adjust the hydrogen permeation amount J (that is, hydrogen separation amount) by controlling the booster pump 35 on the inlet side of the hydrogen separation filter 32 to control Pᵢₙ. At this time, a flow rate of the blowby gas G1 by the scavenging of the scavenging pump 31 may be different from a flow rate of the blowby gas G1 to be introduced into the hydrogen separation filter 32 for achieving a desired Pᵢₙ. Therefore, the tank 34 is used to make the flow rate of the blowby gas G1 to the hydrogen separation filter 32 adjustable (to be used on demand).

Thereafter, the treatment device 1 adds hydrogen separated by the hydrogen separation filter 32 to the catalyst unit 21 (step S107). That is, in the treatment device 1, the hydrogen gas G2 generated in the hydrogen separation filter 32 is supplied to the catalyst unit 21 via the hydrogen gas flow path 40 and the hydrogen supply path 50 (hydrogen gas addition unit 45). Note that, the supply of the hydrogen gas G2 to the catalyst unit 21 via the hydrogen gas addition unit 45 can be performed at all times while the hydrogen gas G2 is generated by the hydrogen separation filter 32.

As described above, in the treatment device 1, the scavenging pump 31 is provided in the scavenging flow path 30 circulating the blowby gas G1 from the engine 100. Therefore, by driving this scavenging pump 31, it is possible to actively scavenge the blowby gas G1 containing hydrogen from the engine 100. In particular, in the treatment device 1, the hydrogen separation filter 32 separating hydrogen from the blowby gas G1 to generate the hydrogen gas G2 and the treated gas G3 is provided downstream of the scavenging pump 31 in the scavenging flow path 30. The hydrogen gas G2 among the gases generated from the blowby gas G1 is added to the catalyst unit 21 and consumed by being subjected to reduction of a nitrogen oxide. Therefore, among the gases generated from the blowby gas G1, a gas refluxed to the intake air of the engine 100 or opened to the atmosphere becomes the treated gas G3 having a relatively low hydrogen concentration. Therefore, the ignition risk is reduced. Furthermore, since the hydrogen gas G2 generated from the blowby gas G1 is added to the catalyst unit 21 and reused, the amount of hydrogen separately added to the catalyst unit 21 can be reduced.

Furthermore, in the treatment device 1, the scavenging flow path 30 includes the refluxing unit 30p for refluxing the treated gas G3 generated in the hydrogen separation filter 32 to the intake flow path 10 of the engine 100. Therefore, the treated gas G3 of the blowby gas G1 can be returned to the intake side of the engine 100.

Further, the treatment device 1 includes the hydrogen concentration meter 101 for measuring the hydrogen concentration of the blowby gas G1 in the engine 100, the hydrogen concentration meter 37 for measuring the hydrogen concentration of the treated gas G3, and the control unit 60 controlling each unit on the basis of the measurement results of the hydrogen concentration meters 101 and 37. The control unit 60 executes the first process of increasing the scavenging amount of the blowby gas G1 by the scavenging pump 31 in a case where the hydrogen concentration of the blowby gas G1 in the engine 100 is equal to or more than the first threshold lower than the lower flammability limit concentration of hydrogen on the basis of the measurement result of the hydrogen concentration meter 101, and the second process of increasing the separation amount of hydrogen from the blowby gas G1 by the hydrogen separation filter 32 in a case where the hydrogen concentration of the treated gas G3 is equal to or more than the second threshold lower than the lower flammability limit concentration of hydrogen on the basis of the measurement result of the hydrogen concentration meter 37. Therefore, the ignition risk of the blowby gas G1 can be more reliably reduced.

The above embodiment describes one aspect of the present disclosure. Therefore, the present disclosure is not limited to the above embodiment, and may be a modification of the above embodiment.

For example, in the above embodiment, the control unit 60 executes the first process and the second process for controlling the scavenging pump 31 and the hydrogen separation filter 32 on the basis of the measurement result of the hydrogen concentration of the blowby gas G1 in the engine 100 by the hydrogen concentration meter 101 and the measurement result of the hydrogen concentration of the treated gas G3 by the hydrogen concentration meter 37. However, the control unit 60 may execute the first process and the second process by calculating and estimating the hydrogen concentration of the blowby gas G1 in the engine 100 and the hydrogen concentration of the treated gas G3 from the measurement results of the other hydrogen concentration meters.

Furthermore, in the above embodiment, in the treatment device 1, the supply of the hydrogen gas G2 to the catalyst unit 21 via the hydrogen gas addition unit 45 can be performed at all times while the hydrogen gas G2 is generated by the hydrogen separation filter 32. In addition thereto, in the treatment device 1, the refluxing of the treated gas G3 to the intake flow path 10 via the refluxing unit 30p can also be performed at all times while the treated gas is generated by the hydrogen separation filter 32.

Meanwhile, in the treatment device 1, a valve or the like is provided in the refluxing unit 30p, and the control unit 60 controls the opening and closing of the valve according to the hydrogen concentration of the treated gas G3, so that it is also possible to perform a process of preventing the treated gas G3 from being refluxed to the intake flow path 10, for example, in a case where the hydrogen concentration of the treated gas G3 is equal to or more than the second threshold.

### Industrial Applicability

A treatment device capable of reducing the ignition risk of a blowby gas of a hydrogen engine is provided.

### Reference Signs List

- 1: treatment device
- 10: intake flow path
- 20: exhaust flow path
- 21: catalyst unit
- 30: scavenging flow path
- 30p: refluxing unit
- 31: scavenging pump
- 32: hydrogen separation filter
- 45: hydrogen gas addition unit
- 60: control unit
- 100: engine (hydrogen engine)
- G0: exhaust gas
- G1: blowby gas
- G2: hydrogen gas
- G3: treated gas

## Claims

1. A treatment device for treating a blowby gas of a hydrogen engine, the treatment device comprising:
a catalyst unit provided in an exhaust flow path for circulating an exhaust gas from the hydrogen engine, and configured to reduce a nitrogen oxide contained in the exhaust gas by using hydrogen as a reducing agent;
a scavenging flow path configured to circulate the blowby gas of the hydrogen engine;
a scavenging pump provided in the scavenging flow path, and configured to scavenge the blowby gas from the hydrogen engine to circulate the blowby gas into the scavenging flow path;
a hydrogen separation filter provided downstream of the scavenging pump in the scavenging flow path, and configured to generate a hydrogen gas and a treated gas as a blowby gas obtained after removal of the hydrogen by separating hydrogen contained in the blowby gas from the blowby gas; and
a hydrogen gas addition unit configured to add the hydrogen gas generated in the hydrogen separation filter to the catalyst unit.

2. The treatment device according to claim 1, wherein
the scavenging flow path includes a refluxing unit configured to reflux the treated gas generated in the hydrogen separation filter to an intake flow path of the hydrogen engine.

3. The treatment device according to claim 1 or 2, further comprising:
a first measurement unit configured to measure a hydrogen concentration of the blowby gas in the hydrogen engine;
a second measurement unit configured to measure a hydrogen concentration of the treated gas; and
a control unit configured to control each unit on the basis of measurement results of the first measurement unit and the second measurement unit, wherein
the control unit executes
a first process of increasing a scavenging amount of the blowby gas by the scavenging pump in a case where the hydrogen concentration of the blowby gas in the hydrogen engine is equal to or more than a first threshold lower than a lower flammability limit concentration of hydrogen on the basis of the measurement result of the first measurement unit, and
a second process of increasing a separation amount of hydrogen from the blowby gas by the hydrogen separation filter in a case where the hydrogen concentration of the treated gas is equal to or more than a second threshold lower than the lower flammability limit concentration of hydrogen on the basis of the measurement result of the second measurement unit.
